# FASCICULE DE BREVET EUROPEEN

(11) **EP 3 727 941 B1**
(45) Date de publication et mention de la délivrance du brevet: **19.07.2023**
(21) Numéro de dépôt: 18839821.8
(22) Date de dépôt: 12.12.2018
(51) Int. Cl.: B60R 13/04, B32B 27/34, B32B 27/36, B60Q 1/00

(54) **PANNEAU DE GARNITURE POUR MONTANT EXTÉRIEUR D'UN VÉHICULE AUTOMOBILE ET PROCÉDÉ DE FABRICATION D'UN TEL PANNEAU DE GARNITURE**
VERKLEIDUNGSELEMENT FÜR DIE EXTERNE SÄULE EINES FAHRZEUGS SOWIE HERESTELLUNGSVERFAHREN FÜR EIN DERARTIGES ELEMENT
TRIM PANEL FOR EXTERNAL PILLAR OF A VEHICLE AND METHOD OF MANUFACTURE OF SUCH

(30) Priorité: 22.12.2017 FR 1763161
(43) Date de publication de la demande: 28.10.2020
(73) Titulaire: NOVARES France, 92140 Clamart (FR)
(72) Inventeur: REVEL, Anthony, 01800 VILLIEU LOYES MOLLON (FR); HUGUET, Guillaume, 01250 NIVIGNE ET SURAN (FR); PRIN, Emmanuel, 01100 GROISSIAT (FR); CHENAUD, David, 01100 BELLIGNAT (FR)
(74) Mandataire: Germain Maureau
(86) Numéro de dépôt international: PCT/FR2018/053241
(87) Numéro de publication internationale: WO 2019/122615

(56) Documents cités:
- EP-A1- 2 793 062
- DE-A1-102012 002 650
- DE-A1-102015 214 247

## Description

La présente invention concerne un panneau de garniture pour montant extérieur d'un véhicule automobile.

La présente invention concerne également un procédé de fabrication d'un tel panneau de garniture.

Un panneau de garniture d'un véhicule est connu, par exemple, du document DE 10 2015 214 247 A1.

Il est connu dans l'art antérieur d'équiper les montants extérieurs d'un véhicule automobile de panneaux de garniture possédant une fonction d'affichage ou de décoration. Les montants extérieurs comprennent notamment les pieds milieu de caisse, les montants de porte, les montants de baie, les custodes avant ou arrière. Ces panneaux de garniture sont généralement formés d'un premier élément sensiblement translucide ou transparent et d'un deuxième élément non translucide et non transparent. Le premier élément est disposé sur une partie externe visible du panneau et remplit une fonction de décoration. Le deuxième élément est disposé sous le premier élément et remplit des fonctions mécaniques, en particulier une fonction de fixation avec le reste de la caisse. Ce type de panneau de garniture est généralement fabriqué par un procédé de moulage par injection à deux composants.

La matière utilisée pour ces deux composants est généralement différente.

Une des améliorations récentes dans ces panneaux de garniture a consisté à former un évidement à l'intérieur du deuxième élément non translucide et non transparent et à fixer sur ledit deuxième élément au niveau dudit évidement un module électronique d'affichage. Ainsi, l'affichage produit par le module électronique est visible par transparence au travers du premier élément du panneau.

Toutefois, lors de la fabrication de tels panneaux de garniture améliorés, plusieurs problèmes techniques sont apparus. Un des problèmes est l'apparition de défauts de surface du fait du différentiel de retrait entre le premier élément et le deuxième élément au niveau de l'évidement mais également du fait de l'utilisation de matières différentes. Ce différentiel de retrait produit ainsi un effet de vague sur la partie du premier élément qui se trouve à l'aplomb de l'évidement. Un deuxième problème est le différentiel d'inertie mécanique au sein même du premier élément du fait de la variation d'épaisseur générée par l'évidement. Ce différentiel d'inertie mécanique accroît encore l'effet de vague. Finalement, un dernier problème est la mise en contact direct du matériau constitutif du premier élément avec les parties constitutives du moule au niveau de l'évidement. Cette mise en contact directe génère des contraintes locales dans le premier élément, notamment du fait que le matériau constitutif est encore chaud au moment du contact.

L'invention vise donc à résoudre les problèmes susmentionnés.

A cet effet, l'invention a pour objet un panneau de garniture pour montant extérieur d'un véhicule automobile, comprenant :
- Un premier élément de garniture formé d'un premier matériau translucide ou transparent, ledit premier élément possédant une surface externe orientée vers l'extérieur du véhicule et une surface interne orientée vers l'intérieur du véhicule ;
- Un deuxième élément de garniture formé d'un deuxième matériau non translucide et non transparent, ledit deuxième élément possédant une surface externe en contact avec la surface interne du premier élément, ledit deuxième élément possédant en outre au moins un évidement qui est exempt du deuxième matériau ;
- Un insert formé d'un troisième matériau translucide ou transparent, ledit insert comprenant une partie d'emboîtement disposée de manière à remplir complètement l'évidement du deuxième élément.

Ainsi, le premier élément et/ou l'insert pourront être opaques dans le domaine du visible, mais être transparents pour le laser ou les ondes infrarouges.

Ainsi configuré, le panneau de garniture ne présentera plus de défauts de surface au niveau de l'élément de garniture translucide externe du fait de la présence de l'insert, lequel vient combler l'évidement lors de la fabrication du panneau. Ainsi positionné, l'insert empêche, d'une part, le phénomène de retrait plus important du matériau constitutif de l'élément de garniture non translucide à l'intérieur de l'évidement, et permet, d'autre part, de rigidifier le panneau, une continuité d'inertie mécanique étant assurée par l'insert au niveau de l'évidement. Finalement, l'insert évite que le matériau constitutif de l'élément de garniture externe ne soit en contact direct avec les parties constitutives du moule.

Dans une configuration particulière de l'invention, l'insert est muni sur une face interne orientée vers l'intérieur du véhicule de moyens de fixation configurés pour permettre la fixation d'un module accessoire.

Dans une configuration particulière de l'invention, les moyens de fixation comprennent des ergots formés en saillie depuis la face interne de l'insert, lesdits ergots possédant un alésage permettant le vissage du module accessoire sur l'insert.

Dans une autre configuration particulière de l'invention, les moyens de fixation sont choisis parmi les clips et les fûts pour bouterollage.

Dans une configuration particulière de l'invention, le panneau comprend un module accessoire fixé sur l'insert, et le module accessoire comprend une puce NFC.

Dans une configuration particulière de l'invention, le panneau comprend un module accessoire fixé sur l'insert, et le module accessoire comprend un élément d'éclairage.

Dans une configuration particulière de l'invention, l'insert est muni sur une face externe d'un élément technique rapporté ou structuré sur ladite face externe, l'élément technique définissant un module électronique ou un élément de chauffage.

Dans une configuration particulière de l'invention, le premier matériau utilisé pour la réalisation du premier élément est choisi parmi le poly-méthacrylate de méthyle et le polycarbonate.

Dans une configuration particulière de l'invention, le deuxième matériau utilisé pour la réalisation du deuxième élément est choisi parmi l'acrylonitrile butadiène styrène et le polycarbonate.

Dans une configuration particulière de l'invention, le troisième matériau utilisé pour la réalisation de l'insert est choisi parmi le poly-méthacrylate de méthyle, le polycarbonate et le polyamide.

La présente invention a également pour objet un procédé de fabrication d'un panneau de garniture pour montant extérieur d'un véhicule automobile, comprenant les étapes de :
a) Fournir un insert formé d'un matériau translucide ou transparent ou permettant la diffusion de lumière possédant une certaine longueur d'onde, ledit insert comprenant une partie d'emboîtement,
b) Fournir un premier élément de garniture formé d'un matériau translucide ou transparent ou permettant la diffusion de lumière possédant une certaine longueur d'onde,
c) Assembler le premier élément de garniture avec l'insert de telle manière qu'une surface interne du premier élément de garniture soit au contact au moins localement avec la partie d'emboîtement de l'insert,
d) Disposer l'assemblage formé à l'étape c) dans un moule d'injection,
e) Fermer le moule, ledit assemblage étant positionné dans le moule de manière à laisser au moins une cavité interne exempt de tout matériau,
f) Injecter un matériau non translucide et non transparent ou ne permettant pas la diffusion de lumière possédant une certaine longueur d'onde dans ladite cavité interne de manière à former un deuxième élément de garniture,
g) Ouvrir le moule,
h) Ejecter le panneau de garniture ainsi formé.

Dans une configuration particulière du procédé de l'invention, le moule d'injection est formé d'une première partie fixe et d'une deuxième partie mobile et les étapes c), d) et e) sont réalisées simultanément, lorsque la deuxième partie de moule contenant le premier élément de garniture se déplace jusqu'à rejoindre la première partie de moule contenant l'insert, fermant ainsi le moule, l'insert n'étant alors en contact avec le premier élément de garniture que le long des bords périphériques de la partie d'emboîtement.

Dans une configuration particulière du procédé de l'invention, les étapes b) et c) sont réalisées simultanément par surmoulage du premier élément de garniture sur l'insert dans un moule d'injection.

Dans une configuration particulière du procédé de l'invention, le moule d'injection est équipé d'un presseur mobile configuré pour ajuster la pression appliquée sur le premier élément de garniture lors de l'étape e).

D'autres caractéristiques et avantages ressortiront clairement de la description ci-après d'un mode de réalisation d'un panneau de garniture selon l'invention, donné à titre d'exemple non limitatif, et de deux procédés de fabrication d'un tel panneau de garniture, en référence aux dessins annexés dans lesquels :
- La figure 1 illustre un véhicule automobile muni d'un panneau de garniture selon l'invention ;
- La figure 2 est une vue éclatée et en perspective des divers éléments constitutifs d'un panneau de garniture selon l'invention;
- La figure 3 est une vue en perspective d'un panneau de garniture selon l'invention, une fois moulé ;
- La figure 4 est une vue agrandie de l'insert qui est visible sur le panneau représenté sur la figure 3 ;
- La figure 5 est une vue en coupe selon le plan oblique AA de la figure 4 ;
- Les figures 6A à 6F illustrent de manière schématique les étapes successives d'une première variante de procédé de fabrication permettant de réaliser un panneau de garniture selon l'invention ;
- Les figures 7A à 7F illustrent de manière schématique les étapes successives d'une deuxième variante de procédé de fabrication permettant de réaliser un panneau de garniture selon l'invention ;
- La figure 8 est une vue similaire à la figure 5 dans le cas où le panneau est fabriqué selon le procédé des figures 6A à 6F ;
- la figure 8A est une vue agrandie du détail A de la figure 8.

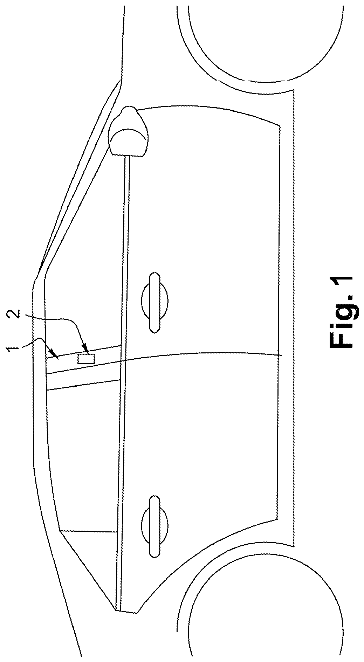

Le véhicule automobile représenté sur la figure 1 comprend un élément de garniture de montant extérieur 1 muni d'un élément d'affichage 2 prévu pour afficher des informations qui sont visibles depuis l'extérieur du véhicule. Cet élément d'affichage 2 est en fait disposé sous un panneau de garniture dans lequel une fenêtre translucide ou transparente a été disposée dans l'alignement de l'élément d'affichage 2 de manière à rendre visible les informations affichées par ledit élément d'affichage 2.

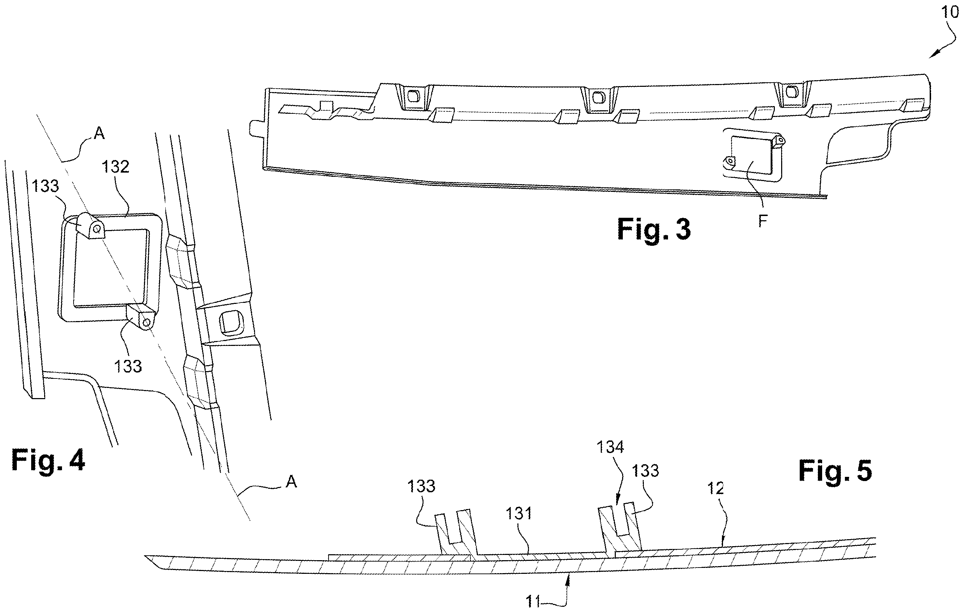

En référence à la figure 3, il est représenté un exemple de panneau de garniture selon l'invention pouvant être utilisé dans le véhicule de la figure 1 de manière à rendre visible des informations affichées par l'élément d'affichage 2. Ce panneau 10 est notamment formé d'une fenêtre F translucide ou transparente à travers laquelle les informations diffusées par l'élément d'affichage 2 pourront être vues à l'extérieur du véhicule.

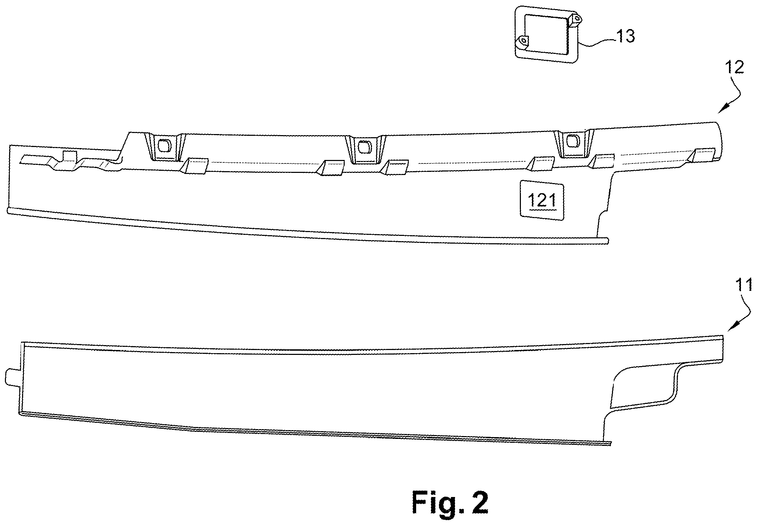

En référence à la figure 2, il est représenté les éléments constitutifs principaux du panneau de la figure 3. Ainsi, le panneau 10 comprend un premier élément de garniture 11 complètement translucide ou transparent. Ce premier élément 11 sera de préférence constitué de PMMA (poly-méthacrylate de méthyle) ou de PC (Polycarbonate). Il possédera en outre au moins une surface brillante, continue et lisse. Le panneau 10 comprend également un deuxième élément de garniture 12 non translucide et non transparent. Ce deuxième élément 12 sera de préférence constitué d'un matériau opaque et présentant des caractéristiques mécaniques améliorées, par exemple en ABS (acrylonitrile butadiène styrène) ou en PC (Polycarbonate). Ce deuxième élément 12 est positionné derrière le premier élément 11, lequel forme la partie externe visible du panneau 10. Le deuxième élément 12 possède un évidement 121 de forme sensiblement rectangulaire. L'évidement 121 est donc exempt du matériau non translucide et non transparent. Il définit donc partiellement la fenêtre F du panneau 10. Le panneau 10 comprend finalement un insert 13 constitué d'un matériau translucide ou transparent, du type par exemple PMMA ou PC (polycarbonate).

Comme représenté en détail sur les figures 4 et 5, l'insert 13 comprend une partie d'emboîtement 131 possédant une forme complémentaire de celle de l'évidement 121 de telle sorte que, dans le panneau final moulé, elle remplit complètement l'évidement 121. Cette partie d'emboîtement 131 va donc empêcher que, lors du surmoulage du deuxième élément 12 sur le premier élément 11, le matériau constitutif du deuxième élément 12 opère un retrait plus important au niveau de l'évidement 121 que le matériau constitutif du premier élément 11. Elle va également permettre de rigidifier le panneau 10 étant donné que l'espace vide autrefois défini par l'évidement 121 est comblé par ladite partie d'emboîtement 131. Par ailleurs, l'insert 13 présente un bord périphérique 132 encerclant la partie d'emboîtement 131 et positionné légèrement en retrait vers l'intérieur du véhicule, ledit bord 132 reposant sur une face interne du deuxième élément 12. Depuis ce bord périphérique 132 font saillie vers l'intérieur des ergots 133 possédant chacun un alésage 134. Ces alésages 134 vont ainsi permettre de visser un module accessoire (non représenté) sur l'insert 13. Les ergots 133 pourront être remplacés par des clips, des fûts de bouterollage ou tout autre type de fixation. Un tel module accessoire pourra notamment comprendre un écran, une surface capacitive, une caméra, un radar, un lecteur d'empreinte digital/rétinienne, un système de retour haptique, une puce NFC ou bluetooth, un élément d'éclairage, un élément chauffant. Il est également envisageable de munir une face externe de l'insert 13 d'un élément technique tel que de décoration ou électronique, ledit élément technique pouvant être déposé sur la face externe de l'insert par un procédé choisi parmi le dépôt par électrolyse de chrome, l'impression à chaud, la gravure laser, 3d-MID, métallisation sous vide, surmoulage de film technique, la tampographie et l'impression jet d'encre ou encore réalisé par une structuration de la matière. Ainsi l'insert 13 pourra porter lui-même les éléments d'affichage comme une puce NFC, un élément d'éclairage et un élément de chauffage. Dans cette configuration l'insert 13 peut éventuellement être réalisé dans un autre matériau technique tel que par exemple un polyamide translucide ou non-translucide.

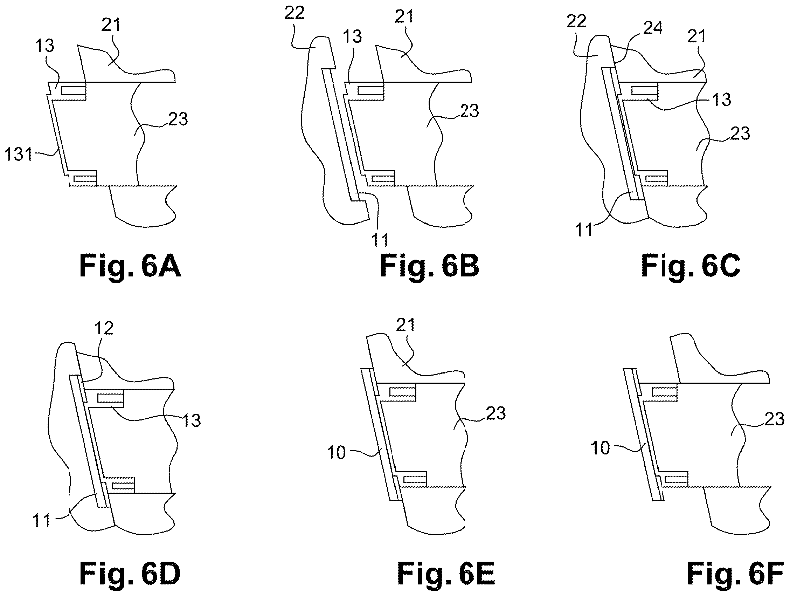

En référence aux figures 6A à 6F, il est représenté les étapes successives d'une première variante d'un procédé de fabrication permettant de réaliser un panneau de garniture selon l'invention.

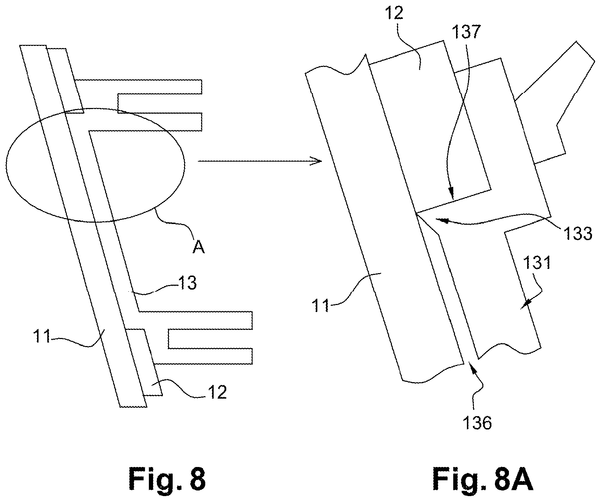

Dans cette première variante, l'insert 13 comprenant la partie d'emboîtement 131 est disposé d'abord (voir figure 6A) à l'intérieur d'une partie fixe 21 d'un moule d'injection. Dans une seconde étape (voir figure 6B), le premier élément 11 de garniture est disposé à l'intérieur d'une partie mobile 22 du moule d'injection, ledit premier élément 11 étant disposé face à la partie d'emboîtement 131 de l'insert 13. Préalablement à cette seconde étape, le premier élément 11 aura été réalisé par moulage par injection et, de préférence, en utilisant un moule d'injection rotatif possédant plusieurs empreintes, l'une des empreintes correspondant à la partie fixe 21. Dans une troisième étape (voir figure 6C), la partie mobile 22 du moule se déplace jusqu'à rejoindre la partie fixe 21 du moule, fermant ainsi le moule d'injection. L'insert 13 est alors à la fois au contact de l'élément 11 et d'un presseur mobile 23 sur sa face interne, ledit presseur permettant d'appliquer une pression ajustable entre l'insert 13 et l'élément 11. Une cavité interne 24 libre de tout matériau est alors formée à l'intérieur du moule, ladite cavité 24 possédant sensiblement la forme périphérique du deuxième élément 12 de garniture. Il est à noter que, dans cette variante, l'insert 13 n'est pas soudé au premier élément 11, mais seulement en appui. Un des avantages de cette variante est de limiter les risques de dégradation des éventuels éléments techniques cités plus avant et supportés par la face externe de l'insert 13. Une manière astucieuse de réaliser l'insert 13 permettant de limiter les risques d'infiltration du deuxième matériau entre l'insert 13 et le premier élément 11 est représentée sur la figure 8A. Cette manière présente plusieurs avantages. D'une part, l'insert 13 n'est en contact avec le premier élément 11 que le long des bords périphériques 135 de la partie d'emboîtement 131. Une lame d'air 136 peut donc exister entre le premier élément 11 et l'insert 13. D'autre part, l'insert 13 possède un bord oblique 137 en contact avec le deuxième matériau de telle sorte que la pression exercée par le deuxième matériau tend à plaquer les bords périphériques 135 de la partie d'emboîtement 131 contre le premier élément 11. A l'étape suivante (voir figure 6D), le matériau constitutif du deuxième élément 12 est injecté dans la cavité interne 24 du moule. Par la suite (voir figure 6E), la partie mobile 22 du moule est séparée de la partie fixe 21 et le panneau 10 ainsi formé est éjecté de la partie fixe 21 du moule au moyen du presseur mobile 23 (voir figure 6F).

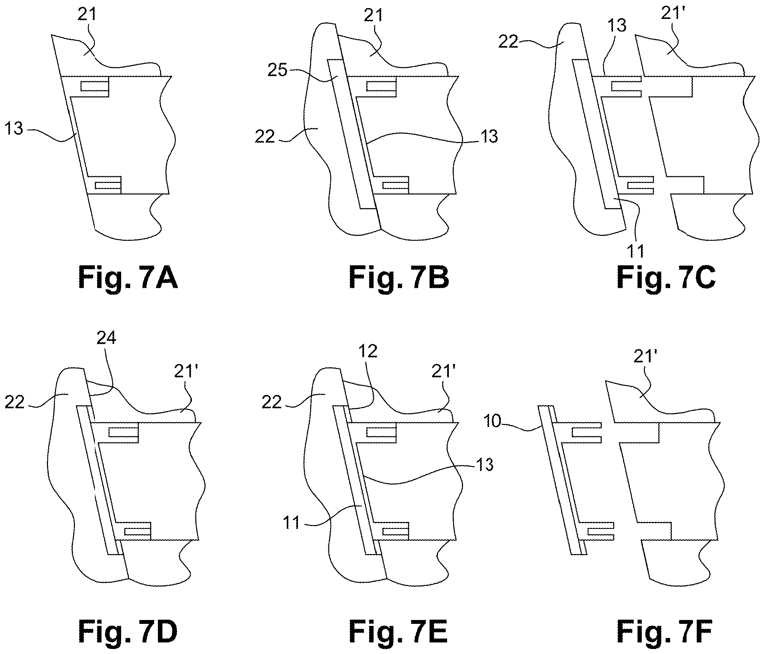

En référence aux figures 7A à 7F, il est représenté les étapes successives d'une deuxième variante d'un procédé de fabrication permettant de réaliser un panneau de garniture selon l'invention.

Dans cette deuxième variante, l'insert 13 comprenant la partie d'emboîtement 131 est disposé d'abord (voir figure 7A) à l'intérieur d'une partie fixe 21 d'un moule d'injection. Dans une seconde étape (voir figure 7B), une partie mobile 22 du moule se déplace jusqu'à rejoindre la partie fixe 21 du moule, fermant ainsi le moule d'injection. Une cavité interne 25 libre de tout matériau est alors formée à l'intérieur du moule, ladite cavité 25 possédant sensiblement la forme périphérique du premier élément 11 de garniture. A l'étape suivante (non représentée), le matériau constitutif du premier élément 11 est injecté dans la cavité interne 25 du moule. Par la suite, la partie mobile 22 du moule est séparée de la partie fixe 21 et l'assemblage ainsi formé du premier élément de garniture 11 et de l'insert 13 reste à l'intérieur de la partie mobile 22 du moule. A l'étape suivante (voir figure 7C), la partie mobile 22 du moule se déplace face à une autre partie fixe 21' d'un autre moule, ou du même moule dans le cas d'un moule rotatif à plusieurs empreintes, et se déplace ensuite jusqu'à rejoindre ladite partie fixe 21', fermant ainsi le moule d'injection (voir figure 7D). Une cavité interne 24 libre de tout matériau est alors formée à l'intérieur du moule, ladite cavité 24 possédant sensiblement la forme périphérique du deuxième élément 12 de garniture. A l'étape suivante (voir figure 7E), le matériau constitutif du deuxième élément 12 est injecté dans la cavité interne 24 du moule. Par la suite, la partie mobile 22 du moule est séparée de la partie fixe 21' et le panneau 10 ainsi formé est éjecté de la partie fixe 21' du moule (voir figure 7F).

## Revendications

1. Panneau de garniture (10) pour montant extérieur (1) d'un véhicule automobile, comprenant :
- Un premier élément (11) de garniture formé d'un premier matériau translucide ou transparent, ledit premier élément (11) possédant une surface externe orientée vers l'extérieur du véhicule et une surface interne orientée vers l'intérieur du véhicule ;
- Un deuxième élément (12) de garniture formé d'un deuxième matériau non translucide et non transparent, ledit deuxième élément (12) possédant une surface externe en contact avec la surface interne du premier élément (11), ledit deuxième élément (12) possédant en outre au moins un évidement (121) qui est exempt du deuxième matériau ;
- Un insert (13) formé d'un troisième matériau translucide ou transparent, ledit insert (13) comprenant une partie d'emboîtement (131) disposée de manière à remplir complètement l'évidement (121) du deuxième élément (12).

2. Panneau de garniture (10) selon la revendication 1, dans lequel l'insert (13) est muni sur une face interne orientée vers l'intérieur du véhicule de moyens de fixation (133) configurés pour permettre la fixation d'un module accessoire.

3. Panneau de garniture (10) selon la revendication 2, dans lequel les moyens de fixation comprennent des ergots (133) formés en saillie depuis la face interne de l'insert (13), lesdits ergots (133) possédant un alésage (134) permettant le vissage du module accessoire sur l'insert (13).

4. Panneau de garniture (10) selon la revendication 2, dans lequel les moyens de fixation sont choisis parmi les clips et les fûts pour bouterollage.

5. Panneau de garniture (10) selon l'une des revendications 2 à 4, comprenant un module accessoire fixé sur l'insert (13), dans lequel le module accessoire comprend une puce NFC.

6. Panneau de garniture (10) selon l'une des revendications 2 à 4, comprenant un module accessoire fixé sur l'insert (13), dans lequel le module accessoire comprend un élément d'éclairage.

7. Panneau de garniture (10) selon l'une des revendications précédentes, dans lequel l'insert (13) est muni sur une face externe d'un élément technique rapporté ou structuré sur ladite face externe, l'élément technique définissant un module électronique ou un élément de chauffage.

8. Panneau de garniture (10) selon l'une des revendications précédentes, dans lequel le premier matériau est choisi parmi le poly-méthacrylate de méthyle et le polycarbonate.

9. Panneau de garniture (10) selon l'une des revendications précédentes, dans lequel le deuxième matériau est choisi parmi l'acrylonitrile butadiène styrène et le polycarbonate.

10. Panneau de garniture (10) selon l'une des revendications précédentes, dans lequel le troisième matériau est choisi parmi le poly-méthacrylate de méthyle, le polycarbonate et le polyamide.

11. Procédé de fabrication d'un panneau de garniture (10) de montant extérieur (1) d'un véhicule automobile, comprenant les étapes de :
a) Fournir un insert (13) formé d'un matériau translucide ou transparent ou permettant la diffusion de lumière possédant une certaine longueur d'onde, ledit insert (13) comprenant une partie d'emboîtement (131),
b) Fournir un premier élément de garniture (11) formé d'un matériau translucide ou transparent ou permettant la diffusion de lumière possédant une certaine longueur d'onde,
c) Assembler le premier élément de garniture (11) avec l'insert (13) de telle manière qu'une surface interne du premier élément (11) de garniture soit au contact au moins localement avec la partie d'emboîtement (131) de l'insert (13),
d) Disposer l'assemblage formé à l'étape c) dans un moule d'injection (21, 22),
e) Fermer le moule (21, 22), ledit assemblage étant positionné dans le moule (21, 22) de manière à laisser au moins une cavité interne (24) exempt de tout matériau,
f) Injecter un matériau non translucide et non transparent ou ne permettant pas la diffusion de lumière possédant une certaine longueur d'onde dans ladite cavité interne (24) de manière à former un deuxième élément (12) de garniture,
g) Ouvrir le moule (21, 22),
h) Ejecter le panneau de garniture (10) ainsi formé.

12. Procédé selon la revendication 11, dans lequel le moule d'injection est formé d'une première partie fixe (21) et d'une deuxième partie mobile (22) et dans lequel les étapes c), d) et e) sont réalisées simultanément, lorsque la deuxième partie (22) de moule contenant le premier élément de garniture (11) se déplace jusqu'à rejoindre la première partie (21) de moule contenant l'insert (13), fermant ainsi le moule, l'insert (13) n'étant alors en contact avec le premier élément de garniture (11) que le long des bords périphériques (135) de la partie d'emboîtement (131).

13. Procédé selon la revendication 11, dans lequel les étapes b) et c) sont réalisées simultanément par surmoulage du premier élément (11) de garniture sur l'insert (13) dans un moule d'injection.

14. Procédé selon la revendication 12, dans lequel le moule d'injection (21, 22) est équipé d'un presseur mobile (23) configuré pour ajuster la pression appliquée sur le premier élément de garniture (11) lors de l'étape e).

## Patentansprüche

1. Verkleidungspaneel (10) für die Außensäule (1) eines Kraftfahrzeugs, Folgendes umfassend:
- ein erstes Verkleidungselement (11), das aus einem ersten lichtdurchlässigen oder transparenten Material gebildet ist, wobei das erste Element (11) eine äußere Oberfläche, die zur Außenseite des Fahrzeugs orientiert ist, und eine innere Oberfläche, die zur Innenseite des Fahrzeugs orientiert ist, aufweist;
- ein zweites Verkleidungselement (12), das aus einem zweiten nicht lichtdurchlässigen und nicht transparenten Material gebildet ist, wobei das zweite Element (12) eine äußere Oberfläche in Kontakt mit der inneren Oberfläche des ersten Elements (11) aufweist, wobei das zweite Element (12) ferner mindestens eine Aussparung (121) aufweist, die frei von dem zweiten Material ist;
- einen Einsatz (13), der aus einem dritten lichtdurchlässigen oder transparenten Material gebildet ist, wobei der Einsatz (13) ein Einschubteil (131) umfasst, das derart angeordnet ist, dass es die Aussparung (121) des zweiten Elements (12) vollständig ausfüllt.

2. Verkleidungspaneel (10) nach Anspruch 1, wobei der Einsatz (13) an einer inneren Fläche, die zur Innenseite des Fahrzeugs orientiert ist, mit Befestigungsmitteln (133) versehen ist, die konfiguriert sind, um die Befestigung eines Zubehörmoduls zu gestatten.

3. Verkleidungspaneel (10) nach Anspruch 2, wobei die Befestigungsmittel Vorsprünge (133) umfassen, die so geformt sind, dass sie von der inneren Fläche des Einsatzes (13) vorstehen, wobei die Nasen (133) eine Bohrung (134) aufweisen, die es gestattet, dass das Zubehörmodul auf den Einsatz (13) geschraubt werden kann.

4. Verkleidungspaneel (10) nach Anspruch 2, wobei die Befestigungsmittel aus Klammern und Hülsen zum Nieten ausgewählt sind.

5. Verkleidungspaneel (10) nach einem der Ansprüche 2 bis 4, umfassend ein am Einsatz (13) befestigtes Zubehörmodul, wobei das Zubehörmodul einen NFC-Chip umfasst.

6. Verkleidungspaneel (10) nach einem der Ansprüche 2 bis 4, umfassend ein am Einsatz (13) befestigtes Zubehörmodul, wobei das Zubehörmodul ein Beleuchtungselement umfasst.

7. Verkleidungspaneel (10) nach einem der vorhergehenden Ansprüche, wobei der Einsatz (13) auf einer Außenfläche mit einem technischen Element versehen ist, das auf der Außenfläche angebracht oder strukturiert ist, wobei das technische Element ein Elektronikmodul oder ein Heizelement definiert.

8. Verkleidungspaneel (10) nach einem der vorhergehenden Ansprüche, wobei das erste Material aus Polymethylmethacrylat und Polycarbonat ausgewählt ist.

9. Verkleidungspaneel (10) nach einem der vorhergehenden Ansprüche, wobei das zweite Material aus Acrylnitril-Butadien-Styrol und Polycarbonat ausgewählt ist.

10. Verkleidungspaneel (10) nach einem der vorhergehenden Ansprüche, wobei das dritte Material aus Polymethylmethacrylat, Polycarbonat und Polyamid ausgewählt ist.

11. Verfahren zum Herstellen eines Verkleidungspaneels (10) für eine Außensäule (1) eines Kraftfahrzeugs, umfassend die folgenden Schritte:
a) Bereitstellen eines Einsatzes (13), der aus einem lichtdurchlässigen oder transparenten Material gebildet ist oder das die Lichtstreuung mit einer bestimmten Wellenlänge gestattet, wobei der Einsatz (13) ein Einschubteil (131) umfasst,
b) Bereitstellen eines ersten Verkleidungselements (11), das aus einem lichtdurchlässigen oder transparenten Material gebildet ist oder das die Lichtstreuung mit einer bestimmten Wellenlänge gestattet,
c) Zusammenbauen des ersten Verkleidungselements (11) mit dem Einsatz (13), derart, dass eine innere Oberfläche des ersten Verkleidungselements (11) zumindest bereichsweise mit dem Einschubteil (131) des Einsatzes (13) in Kontakt steht,
d) Einbringen der in Schritt c) gebildeten Anordnung in eine Spritzgussform (21, 22),
e) Schließen der Form (21, 22), wobei die Anordnung derart in der Form (21, 22) positioniert wird, dass mindestens ein innerer Hohlraum (24) frei von jeglichem Material bleibt,
f) Einspritzen eines nicht lichtdurchlässigen und nicht transparenten Materials oder eines Materials, das die Lichtstreuung mit einer bestimmten Wellenlänge nicht gestattet, in den inneren Hohlraum (24), derart, dass ein zweites Verkleidungselement (12) gebildet wird,
g) Öffnen der Form (21, 22),
h) Auswerfen des so gebildeten Verkleidungspaneels (10).

12. Verfahren nach Anspruch 11, wobei die Spritzgussform aus einem ersten feststehenden Teil (21) und einem zweiten beweglichen Teil (22) gebildet wird und wobei die Schritte c), d) und e) gleichzeitig durchgeführt werden, wenn sich der zweite Teil (22) der Form, der das erste Verkleidungselement (11) enthält, bewegt, bis er sich mit dem ersten Teil (21) der Form, der den Einsatz (13) enthält, verbindet, wodurch die Form geschlossen wird, wobei der Einsatz (13) anschließend mit dem ersten Verkleidungselement (11) nur entlang der Umfangskanten (135) des Einschubteils (131) in Kontakt steht.

13. Verfahren nach Anspruch 11, wobei die Schritte b) und c) gleichzeitig durch Umspritzen des ersten Verkleidungselements (11) auf den Einsatz (13) in einer Spritzgussform durchgeführt werden.

14. Verfahren nach Anspruch 12, wobei die Spritzgussform (21, 22) mit einem beweglichen Druckmittel (23) ausgestattet ist, das konfiguriert ist, um den Druck einzustellen, der während Schritt e) auf das erste Verkleidungselement (11) ausgeübt wird.

## Claims

1. A trim panel (10) for an external pillar (1) of a motor vehicle, comprising:
- A first trim element (11) formed by a first material which is translucent or transparent, said first element (11) having an outer surface oriented outwardly of the vehicle and an inner surface oriented inwardly of the vehicle;
- A second trim element (12) formed by a second material which is non-translucent or non-transparent, said second element (12) having an outer surface in contact with the inner surface of the first element (11), said second element (12) further having at least one recess (121) which is devoid of the second material;
- An insert (13) formed by a third material which is translucent or transparent, said insert (13) comprising an interlocking portion (131) disposed so as to completely fill the recess (121) of the second element (12).

2. The trim panel (10) according to claim 1, wherein the insert (13) is provided on an inner face oriented inwardly of the vehicle with fastening means (133) configured to enable fastening of an accessory module.

3. The trim panel (10) according to claim 2, wherein the fastening means comprise lugs (133) projecting from the inner face of the insert (13), said lugs (133) having a bore (134) enabling screwing of the accessory module on the insert (13).

4. The trim panel (10) according to claim 2, wherein the fastening means are selected from clips and snaps for snap-riveting.

5. The trim panel (10) according to any of claims 2 to 4, comprising an accessory module fastened on the insert (13), wherein the accessory module comprises a NFC chip.

6. The trim panel (10) according to any of claims 2 to 4, comprising an accessory module fastened on the insert (13), wherein the accessory module comprises a lighting element.

7. The trim panel (10) according to any of the preceding claims, wherein the insert (13) is provided on an outer face with a technical element attached or structured on said outer face, the technical element defining an electronic module or a heating element.

8. The trim panel (10) according to any of the preceding claims, wherein the first material is selected from poly(methyl methacrylate) and polycarbonate.

9. The trim panel (10) according to any of the preceding claims, wherein the second material is selected from acrylonitrile butadiene styrene and polycarbonate.

10. The trim panel (10) according to any of the preceding claims, wherein the third material is selected from poly(methyl methacrylate), polycarbonate and polyamide.

11. A method for manufacturing a trim panel (10) for an external pillar (1) of a motor vehicle, comprising the steps of:
a) Providing an insert (13) formed by a material which is translucent or transparent or enabling the diffusion of light at a determined wavelength, said insert (13) comprising an interlocking portion (131),
b) Providing a first trim element (11) formed by a material which is translucent or transparent or enabling the diffusion of light at a determined wavelength,
c) Assembling the first trim element (11) with the insert (13) such that an inner surface of the first trim element (11) is in contact at least locally with the interlocking portion (131) of the insert (13),
d) Disposing the assembly formed at step c) within an injection mold (21, 22),
e) Closing the mold (21, 22), said assembly being positioned within the mold (21, 22) so as to leave at least one inner cavity (24) devoid of any material,
f) Injecting a material which is non-translucent and non-transparent or not enabling the diffusion of light at a determined wavelength into said inner cavity (24) so as to form a second trim element (12),
g) Opening the mold (21, 22),
h) Ejecting the trim panel (10) thus formed.

12. The manufacturing method according to claim 11, wherein the injection mold is formed by a fixed first portion (21) and a movable second portion (22) and wherein steps c), d) and e) are carried out simultaneously, when the second mold portion (22) containing the first trim element (11) is displaced until joining the first mold portion (21) containing the insert (13), thereby closing the mold, the insert (13) then being in contact with the first trim element (11) only along the peripheral edges (135) of the interlocking portion (131).

13. The manufacturing method according to claim 11, wherein steps b) and c) are carried out simultaneously by overmolding of the first trim element (11) over the insert (13) within an injection mold.

14. The manufacturing method according to claim 12, wherein the injection mold (21, 22) is equipped with a movable presser (23) configured to adjust the pressure applied on the first trim element (11) during step e).
